# EUROPÄISCHE PATENTSCHRIFT

(11) **EP 1 224 069 B1**
(45) Veröffentlichungstag und Bekanntmachung des Hinweises auf die Patenterteilung: **21.09.2005**
(21) Anmeldenummer: 00974380.8
(22) Anmeldetag: 09.10.2000
(51) Int. Cl.: B29C 49/24

(54) **ETIKETT AUS POLYOLEFINFOLIE**
LABEL MADE OF POLYOLEFIN FILM
ETIQUETTE A BASE DE FILM EN POLYOLEFINE

(30) Priorität: 15.10.1999 DE 19949898
(43) Veröffentlichungstag der Anmeldung: 24.07.2002
(73) Patentinhaber: Treofan Germany GmbH & Co.KG, 66539 Neunkirchen (DE)
(72) Erfinder: WIENERS, Gerhard, 60320 Frankfurt (DE); TEWS, Wilfried, 66894 Bechhofen (DE)
(86) Internationale Anmeldenummer: PCT/EP2000/009826
(87) Internationale Veröffentlichungsnummer: WO 2001/028755

(56) Entgegenhaltungen:
- EP-A- 0 436 044
- EP-A- 0 559 484
- EP-A- 0 593 080
- EP-A- 0 787 581
- WO-A-97/30903
- WO-A-99/55518
- DE-A- 4 203 338
- US-A- 5 242 650
- US-A- 5 405 667
- PATENT ABSTRACTS OF JAPAN vol. 016, no. 233 (E-1209), 28. Mai 1992 (1992-05-28) & JP 04 047614 A (SHIN ETSU CHEM CO LTD), 17. Februar 1992 (1992-02-17)
- PATENT ABSTRACTS OF JAPAN vol. 018, no. 209 (C-1190), 13. April 1994 (1994-04-13) & JP 06 009804 A (OKAMOTO IND INC), 18. Januar 1994 (1994-01-18)
- PATENT ABSTRACTS OF JAPAN vol. 014, no. 049 (M-0927), 29. Januar 1990 (1990-01-29) & JP 01 278345 A (TORAY IND INC), 8. November 1989 (1989-11-08)

## Beschreibung

Die vorliegende Erfindung betrifft die Verwendung einer Polypropylenfolie als In-Mould-Etikett für das Blasformen.

Beim Blasformen eines Hohlkörpers wird ein Schlauch eines geeigneten Polymeren kontinuierlich oder diskontinuierlich extrudiert. Der Schlauch wird in eine mehrteilige Hohlform eingelegt, dabei am unteren Ende abgequetscht und zugleich am oberen Ende abgeschnitten. In die verbleibende obere Öffnung fährt eine Düse formschlüssig ein, durch die beim eigentlichen Blasvorgang Luft eingeblasen wird. Dabei wird die Schlauchblase aufgeblasen und formschlüssig an die Wandung der Hohlform angelegt. Danach wird die Form geöffnet, oben und unten überstehende Schlauchrest vom ausgeformten Hohlkörper entfernt und der Vorgang von neuem gestartet.

Die Etikettierung bei der Herstellung von Behältern mittels Blasformen ist im Stand der Technik bekannt und wird als In-Mould Etikettierung bezeichnet. Hierbei wird, meist von einem Roboter, ein Etikett so in die geöffnete Blasform eingelegt, daß die bedruckte Außenseite des Etiketts an der Formwand anliegt und die unbedruckte Innenseite dem zu formenden Hohlkörper zugewendet ist. Beim Zuführen der schlauchförmigen Schmelze und Ausformen des Hohlkörpers durch den Luftdruck schmiegt sich die noch plastische Oberfläche der Kunststoffmasse innig an das Etikett an und verbindet sich mit ihm zu einem etikettierten Behältnis.

Bei diesem Etikettierprozeß muß dafür gesorgt werden, daß das Etikett glatt und faltenfrei an der Formwand anliegt. Dies erfolgt entweder mittels Vakuum, das an feine Entlüftungsbohrungen in der Weise angelegt wird, daß die Bohrungen dabei vom Etikett weitgehend verschlossen werden, oder mittels elektrostatischer Kräfte zwischen dem elektrostatisch geladenen Etikett und der geerdeten Form.

Bei diesem Herstellprozeß wird das Etikett entweder, besonders bei einfachen Etikettenformen, in Rollenform zugeführt und an der Blasformmaschine zugeschnitten "(Cut in place") oder, bei komplexeren Etikettenumrissen, vorab und abseits der Blasformmaschine zugeschnitten, gestapelt und später an der Blasformmaschine vom Stapel vereinzelt (Cut & stack-Verfahren) und in die jeweilige Blasform eingelegt.

Folien aus thermoplastischen Kunststoffen werden in jüngster Zeit vermehrt zur Etikettierung von Behältnissen verwendet. Die Folien, die für eine derartige Verwendung geeignet sind, müssen ein ausgewähltes Eigenschaftsprofil aufweisen, um zu gewährleisten, daß sich Etikettenfolie und Formkörper glatt und blasenfrei aneinander schmiegen und sich miteinander verbinden. Hierfür wurden im Stand der Technik zum Teil technisch aufwendige Lösungen gefunden. So wird in einer Ausführungsform eine BOPP-Folie auf der Innenseite in einem Kreuzgitter-Raster mit einem Adhäsiv beschichtet. Es ist bekannt, daß eine solche Beschichtung mit erheblichen Unkosten verbunden ist.

Darüberhinaus erfordern die unterschiedlichen Druckverfahren und Etikettierungsprozesse unterschiedliche Folieneigenschaften, insbesondere verschiedene Eigenschaftsprofile. Dies bedeutet, daß sehr häufig nicht nur eine einzige gute Eigenschaft die Verwendung der Folie für den vorgesehenen Zweck ermöglicht. Vielmehr gewährleistet erst eine Vielzahl von Eigenschaften, die gleichzeitig an einer Folie realisiert werden müssen, die Verwendbarkeit für den vorgesehenen Zweck.

DE 42 03 338 beschreibt die Verwendung einer transparenten Folie aus EthylenVinylacetat-Copolymeren mit einem Vinylacetatgehalt von 25 bis 35% als einseitig klebende Folie, insbesondere für Plantafeln, wobei die Haftfestigkeit auf polaren Wechselwirkungen der Vinylacetatreste beruht uind daher gezielt varierbar ist.

JP 04 0476 614 beschreibt eine Abdeckfolie mit einer aushärtbaren Kleberschicht.

Der Kleber wird auf die Oberfläche einer elektrisch isolierenden Folie aufgebracht und teilweise ausgehärtet. Anschließend wird die Kleberschicht mittels Walze geprägt, um Rauheit zu erzeugen.

EP 0 559 484 beschreibt eine coextrudierte biaxial orientierte Folie, deren Außenschicht aus Polyethylen und Füllstoff aufgebaut ist. Eine zweite Schicht der Folie ist aus vakuolenhaltigem Polypropylen. Die Folie wird als in-mold Etikett verwendet.

So wurde die Verwendung einer opaken Folie für die Blasform-In-Mould-Etikettierung vorgeschlagen, welche mindestens eine Basisschicht aufweist, die vakuoleninizierende Füllstoffe und Pigmente enthält und auf beiden Seiten dieser Basisschicht Deckschichten aufweist, wobei die Folie insgesamt eine Dicke von mindestens 85µm aufweist und die Basisschicht eine Kombination aus tertiärem aliphatischen Amin und Fettsäureamid enthält und beide Deckschichten Antiblockmittel enthalten und die Dichte der Folie in einem Bereich von 0,65 bis 0,85 g/cm3 liegt sowie auf beiden Seiten corona- oder flamm-behandelt ist.

Ferner wurden vorgeschlagen, solche opaken Folien in Verbindung mit spezielle Additivrezepturen und speziell gewählten Foliendicken einzusetzen, um deren Verwendbarkeit für den erfindungsgemäßen Zweck zu gewährleisten.

Die bekannten Folien sind erfahrungsgemäß geeignet, Hohlkörper mit flach-ovalem Querschnitt, insbesondere auf den flach gewölbten Flächen, zu etikettieren. Bei Hohlkörpern mit stärkeren Krümmungsradien, z.B. mit rund-ovalem Querschnitt oder bei Etikettierung der Schmalseiten flach-ovaler Hohlkörper treten Blasen auf, die das Erscheinungsbild erheblich stören. Diese Blasen sind in der Regel prall mit Luft gefüllt.

Die Aufgabe der vorliegenden Erfindung bestand darin, eine kostengünstige Etikettenfolie zur Verfügung zu stellen, welche für die In-Mould-Etikettierung im Blasform-Verfahren geeignet sein soll. Insbesondere soll die Folie als blasenfreies Etikett auf gewölbte Körper, auch mit starkem Krümmungsradius, aufzubringen sein und keine anderweitigen optischen Defekte aufweisen. Gleichzeitig dürfen wichtige andere Gebrauchseigenschaften der Folie wie Glanz, Bedruckbarkeit, Entstapelbakeit nicht beeinträchtigt werden.

Die der Erfindung zugrundeliegende Aufgabe wird gelöst durch Verwendung einer mehrschichtigen Polypropylenfolie als In-Mould-Etikett im Blasform-Verfahren, bei dem eine Etikettenfolie, welche mindestens eine Basisschicht und Füllstoffe enthält, eine innere Deckschicht mit einer Dicke von 1 bis 5 µm, und eine äußere Deckschicht umfaßt, so in eine Hohlform einer Blasformmaschine eingelegt wird, daß die innere Deckschicht einem zu formenden HDPE-Behältnis zugewendet ist und die äußere Deckschicht mit der Hohlform in Kontakt befindlichen ist, wobei die innere Deckschicht eine Mischung von Polypropylen, Propylencopolymeren oder Propylenterpolymeren mit unverträglichen oder teilverträglichen Polymeren enthält und eine Rauheit Rz von 3,5 bis 10µm aufweist.

Es wurde gefunden, daß die rauhe Innenseite der Etikettenfolie deren Verwendbarkeit für den erfindungsgemäßen Zweck gewährleistet.

Die Folie, welche als Blow-Mould-Etikett verwendet wird, ist eine opake Folie. "Opake Folie" bedeutet im Sinne der vorliegenden Erfindung eine undurchsichtige Folie, deren Lichtdurchlässigkeit (ASTM-D 1003-77) höchstens 70 %, vorzugsweise höchstens 50 %, beträgt.

Die Basisschicht der Mehrschichtfolie enthält im allgemeinen ein Polyolefin, vorzugsweise ein Propylenpolymer und Füllstoffe und weitere Additive in jeweils wirksamen Mengen. Im allgemeinen enthält die Basisschicht mindestens 50 Gew.-%, vorzugsweise 60 bis <100 Gew.-%, insbesondere 70 bis <100 Gew.-%, des Polyolefins, jeweils bezogen auf das Gewicht der Schicht.

Als Polyolefine sind Propylenpolymere bevorzugt. Diese Propylenpolymeren enthalten 90 bis 100 Gew.-%, vorzugsweise 95 bis 100 Gew.-%, insbesondere 98 bis 100 Gew.-%, Propyleneinheiten und besitzen einen Schmelzpunkt von 120°C oder höher, vorzugsweise 150 bis 170°C, und im allgemeinen einen Schmelzflußindex von 0,5 bis 8 g/10 min, vorzugsweise 2 bis 5 g/10 min, bei 230°C und einer Kraft von 2,16 kg (DIN 53735). Isotaktisches Propylenhomopolymer mit einem ataktischen Anteil von 15 Gew.-% und weniger, Copolymere von Ethylen und Propylen mit einem Ethylengehalt von 5 Gew.-% oder weniger, Copolymere von Propylen mit C₄-C₈-Olefinen mit einem Olefingehalt von 5 Gew.-% oder weniger, Terpolymere von Propylen, Ethylen und Butylen mit einem Ethylengehalt von 10 Gew.-% oder weniger und mit einem Butylengehalt von 15 Gew.-% oder weniger stellen bevorzugte Propylenpolymere für die Kernschicht dar, wobei isotaktisches Propylenhomopolymer besonders bevorzugt ist. Die angegebenen Gewichtsprozente beziehen sich auf das jeweilige Polymere.

Des weiteren ist eine Mischung aus den genannten Propylenhomo- und/oder -copolymeren und/oder -terpolymeren und anderen Polyolefinen, insbesondere aus Monomeren mit 2 bis 6 C-Atomen, geeignet, wobei die Mischung mindestens 50 Gew.-%, insbesondere mindestens 75 Gew.-%, Propylenpolymerisat enthält.

Geeignete andere Polyolefine in der Polymermischung sind Polyethylene, insbesondere HDPE, LDPE, VLDPE und LLDPE, wobei der Anteil dieser Polyolefine jeweils 15 Gew.-%, bezogen auf die Polymermischung, nicht übersteigt.

Die opake Basisschicht der Folie enthält Füllstoffe in einer Menge von maximal 40 Gew.-%, vorzugsweise 1 bis 30 Gew.-%, insbesondere 2 bis 20 Gew.-%, bezogen auf das Gewicht der opaken Schicht. Füllstoffe sind im Sinne der vorliegenden Erfindung Pigmente und/oder vakuoleniniziierende Teilchen.

Pigmente sind im Sinne der vorliegenden Erfindung unverträgliche Teilchen, die im wesentlichen nicht zur Vakuolenbildung beim Verstrecken der Folie führen. Die färbende Wirkung der Pigmente wird durch die Teilchen selbst verursacht. Im allgemeinen liegt der mittlere Teilchendurchmesser der Pigmente im Bereich von 0,01 bis 1 µm , vorzugsweise 0,01 bis 0,7 µm , insbesondere 0,01 bis 0,4 µm. Übliche Pigmente sind Materialien wie z.B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Weißpigmente wie Calciumcarbonat, Siliciumdioxid, Titandioxid und Bariumsulfat bevorzugt eingesetzt werden.

Die Titandioxidteilchen bestehen im allgemeinen zu mindestens 95 Gew.-% aus Rutil und werden bevorzugt mit einem Überzug aus anorganischen Oxiden und/oder aus organische Verbindungen mit polaren und unpolaren Gruppen eingesetzt. Derartige Beschichtungen des TiO2 sind im Stand der Technik bekannt.

Im Sinne der vorliegenden Erfindung sind "vakuoleniniziierende Füllstoffe" feste Teilchen, die mit der Polymermatrix unverträglich sind und beim Verstrecken der Folien zur Bildung von vakuolenartigen Hohlräumen führen, wobei Größe, Art und Anzahl der Vakuolen von der Größe der festen Teilchen und den Streckbedingungen wie Streckverhältnis und Strecktemperatur abhängig sind. Die Vakuolen reduzieren die Dichte und geben den Folien ein charakteristisches perlmuttartiges, opakes Aussehen, welches durch Lichtstreuung an den Grenzflächen "Vakuole/Polymermatrix" entsteht. Im allgemeinen beträgt der mittlere Teilchendurchmesser der Teilchen 1 bis 6 µm , vorzugsweise 1,5 bis 5 µm . Der chemische Charakter der Teilchen spielt eine untergeordnete Rolle.

Übliche vakuoleninitiierende Füllstoffe sind anorganische und/oder organische, mit Polypropylen unverträgliche Materialien wie Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum) und Siliciumdioxid, worunter Calciumcarbonat und Siliciumdioxid bevorzugt eingesetzt werden. Als organische Füllstoffe kommen die üblicherweise verwendeten, mit dem Polymeren der Basisschicht unverträglichen Polymeren in Frage, insbesondere solche wie HDPE, Copolymere von cyclischen Olefinen, Polyester, Polystyrole, Polyamide, halogenierte organische Polymere, wobei Polyester wie beispielsweise Poiybutylenterephthalate und Cycloolefincopolymere bevorzugt sind. "Unverträgliche Materialien bzw. unverträgliche Polymere" im Sinne der vorliegenden Erfindung bedeutet, daß das Material bzw. das Polymere in der Folie als separates Teilchen bzw. als separate Phase vorliegt.

Die Basisschicht enthält gegebenenfalls Pigmente in einer Menge von 0,5 bis 10 Gew.-%, vorzugsweise 1 bis 8 Gew.-%, insbesondere 1 bis 5 Gew.-%. Vakuoleniniziierende Füllstoffe sind in einer Menge von 0,5 bis 25 Gew.-%, vorzugsweise 1 bis 15 Gew.-%, insbesondere 1 bis 10 Gew.-% enthalten. Die Angaben beziehen sich auf das Gewicht der Basisschicht.

Die vakuoleninitierenden Füllstoffe reduzieren die Dichte der Folie. Es wurde gefunden, daß es in einer bevorzugten Ausführungsform besonders vorteilhaft ist, die Dichte der Folie in gewissen Grenzen zu halten, vorzugsweise in einem Bereich von 0,5 bis 0,85 g/cm³, insbesondere zwischen 0,65 und 0,85. Folien mit einer Dichte von kleiner 0,5 sind schwierig herzustellen und zeigen bei der Verwendung als Blasform-In-Mould-Etikett häufiger optische Störungen in Form der sogenannten Orangenhaut. Dabei deformiert sich die Etikettenfolie oberflächlich unter Ausbildung millimetergroßer Bläschen. Liegt die Dichte über 0,85 g/cm³, wird die Haftung zum Behältnis schlechter.

Die erfindungsgemäße Folie umfaßt neben der opaken Basisschicht eine innere und eine äußere Deckschicht. Deckschichten sind im Sinne der vorliegenden Erfindung außenliegende Schichten, deren äußere Oberfläche die Folienoberfläche bildet. Im Sinne der vorliegenden Erfindung ist die innere Oberfläche, bzw. die innere Deckschicht, diejenige Folienseite, welche dem Behältnis zugewandt ist und sich beim Blasformen mit dem Formkörper verbindet. Die äußere Oberfläche oder Deckschicht ist naturgemäß die gegenüberliegende Seite, welche beim Etikettierprozeß in Kontakt mit der Hohlform ist und beim etikettierten Behältnis die äußere Oberfläche bildet.

Die äußere Deckschicht der Mehrschichtfolie enthält im allgemeinen mindestens 70 Gew.-%, vorzugsweise 75 bis <100 Gew.-%, insbesondere 90 bis 98 Gew.-%, eines Propylenpolymeren und im allgemeinen Antiblockmittel und Stabilisatoren sowie gegebenenfalls weitere übliche Additive wie Gleitmittel, z.B. Fettsäureamide oder Siloxane in jeweils wirksamen Mengen. Bevorzugt sind Ausführungsformen der äußeren Deckschicht, die Fettsäureamide enthalten. Die vorstehenden Angaben in Gew.-% beziehen sich auf das Gewicht der Deckschicht.

Das Propylenpolymere der äußeren Deckschicht ist vorzugsweise ein Copolymer aus Propylen und Ethylen oder Propylen und Butylen oder Propylen und einem anderen Olefin mit 5 bis 10 Kohlenstoffatomen. Für die Zwecke der Erfindung sind auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die äußere Deckschicht sind Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.-%, bevorzugt 5 bis 8 Gew.-%, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gewicht des Co- oder Terpolymeren.

Die vorstehend beschriebenen Co- und Terpolymeren weisen im allgemeinen einen Schmelzflußindex von 1,5 bis 30 g/10 min, vorzugsweise von 3 bis 15g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 2,16kg (DIN 53735) gemessen.

Die innere Oberfläche der Mehrschichtfolie ist erfindungsgemäß rauh. Der Rz-Wert (bei einem cut-off-Wert 0,25 mm) der Rauheit beträgt hierbei 3,5 µm bis 10µm, vorzugsweise 4,5 bis 8µm. Es wurde gefunden, daß eine rauhe innere Oberfläche der Folie deren Verwendung als Blow-Mould Etikett sehr günstig beeinflußt. Entgegen den Erwartungen wird gleichzeitig die Haftung gegenüber dem Behältnis durch die rauhe Oberfläche nicht beeinträchtigt. Es wurde gefunden, daß insbesondere die Entstehung von Blasen, auch bei stärker gekrümmten Flächen, stark reduziert, teilweise sogar völlig vermieden wird.

Vermutlich trägt die Oberflächenrauheit dazu bei, daß Luftpolster, die sich beim Blasformen zwischen Behältnis und Etikett bilden, nicht eingeschlossen werden. Die rauhe Oberfläche bildet feine Kanäle, die ein Entweichen der Luft ermöglichen.

Grundsätzlich stehen dem Fachmann verschiedene Möglichkeiten zur Verfügung eine rauhe Oberfläche zu erzeugen. Im Rahmen der vorliegenden Erfindung wurde gefunden, daß es besonders vorteilhaft ist, diese Rauheit durch Abmischen von Polypropylen mit unverträglichen oder teilverträglichen Polymeren zu erzeugen. Dieses Verfahren ist technisch einfach realisierbar, da die Erzeugung rauher Oberflächen durch Mischen von unverträglichen Polymeren an sich im Stand der Technik bekannt ist. Es wurde gefunden, daß auf diese Weise hinreichende Rauheit gebildet wird, um eine "Entlüftung" des aufgebrachten Etiketts zu ermöglichen, aber gleichzeitig wird die Haftung gegenüber dem Formkörper nicht beeinträchtigt. Auch andere wichtige Verarbeitungeigenschaften der Folie werden nicht nachteilig oder sogar begünstigt beeinflußt, z.B. ist die Folie besser zu entstapeln.

Die innere Deckschicht der Mehrschichtfolie besteht daher aus einer Mischung oder einem Blend von Polypropylen, Propylencopolymer oder Propylenterpolymer mit unverträglichen oder nur teilweise verträglichen Kunststoffen, die sich während der Herstellung der Folie voneinander in separaten Phasen scheiden. Eine geeignete Mischung kann z.B. im wesentlichen aus Polyethylenen PE und Polypropylenen PP bestehen. Dabei haben sich Mischungen, die im wesentlichen aus PE und Propylen-Co- oder ―terpolymeren bestehen, als besonders geeignet erwiesen. Das Mischungsverhältnis wird dabei so gewählt, daß die innere Oberfläche der Mehrschichtfolie eine geeignete Rauhheit aufweist. Mischungen aus PE und PP oder Propylen-co- und ―terpolymeren sind dann für den Anwendungszweck geeignet, wenn das Mischungsverhältnis (Gewichtsverhältnis) zwischen PE : PP wie 1 : 12 bis 5 : 1, insbesondere zwischen 1 : 5 und 1 : 1,6 beträgt.

Das Polyethylen der oben beschriebenen Mischung kann ein hochdichtes oder ein niedrigdichtes Polyethylen sein, wobei letzteres sowohl nach dem Hoch- wie auch nach dem Niederdruck (oder Ziegler-Natta-)-Verfahren hergestellt sein kann. Der Schmelzflußindex, gemessen bei 190 °C/ 2,16 kg, kann dabei zwischen 0,1 und 30g/10min, vorzugsweise zwischen 0,1 und 10 g/10 min, insbesondere 0,5 bis 5g/10min betragen.

Das Propylenpolymere der Mischung für die inneren Deckschicht ist vorzugsweise ein Copolymer aus Propylen und Ethylen oder Propylen und Butylen oder Ethylen und Butylen oder Propylen und einem anderen Olefin mit 5 bis 10 Kohlenstoffatomen. Für die Zwecke der Erfindung sind auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die Mischung mit PE sind Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.-%, bevorzugt 5 bis 8 Gew.-%, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gewicht des Co- oder Terpolymeren.

Die vorstehend beschriebenen Co- und Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 120 bis 140°C. Das vorstehend beschriebene Blend aus Co- und Terpolymeren hat einen Schmelzflußindex von 5 bis 9 g/10 min und einen Schmelzpunkt von 110 bis 150°C. Alle vorstehend angegebenen Schmelzflußindices werden bei 230°C und einer Kraft von 2,16 kg (DIN 53735) gemessen.

Die innere Deckschicht enthält im allgemeinen mindestens 70 Gew.-%, vorzugsweise 75 bis <100 Gew.-%, insbesondere 90 bis 98 Gew.-% (bezogen auf das Gewicht der Deckschicht), der Mischung aus Propylenpolymeren und Polyethylen. Darüber hinaus können in der inneren Deckschicht Antiblockmittel sowie Stabilisatoren und gegebenenfalls weitere übliche Additive wie Gleitmittel, z.B. Fettsäureamide oder Siloxane in jeweils wirksamen Mengen enthalten sein.

Im Rahmen der vorliegenden Erfindung ist es ebenfalls möglich durch andere Maßnahmen eine geeignete Oberflächenrauhigkeit der inneren Deckschicht zu erzeugen. Beispielsweise ist es möglich durch verfahrenstechnische Maßnahmen oder durch entsprechende β-Nukleierungsmittel in der inneren Deckschicht die Bildung von β-Sphärollten beim Abkühlen der Vorfolie zu steigern, wodurch beim anschließenden Verstrecken kraterartige Verformungen auf der Oberfläche entstehen, welche ebenfalls die Entlüftung des Etiketts beim Etikettieren ermöglichen.

Hinsichtlich der enthaltenen Additive ist es bevorzugt, daß die Basisschicht tertiäres aliphatisches Amin in einer Menge von 0,02 bis 0,3 Gew.-%, vorzugsweise 0,05 bis 0,2 Gew.-%, und Fettsäureamide in einer Menge von 0,04 bis 0,4 Gew.-%, , vorzugsweise 0,07 bis 0,25 Gew.-%, und Glycerinmonostearat in einer Menge von 0,05 bis 0,4 Gew.-%,, vorzugsweise 0,10 bis 0,25 Gew.-%, enthält.

Tertiäre aliphatische Amine umfassen Verbindungen der allgemeinen Formel R₃N, worin R einen Fettsäurerest oder einen C₁₂-C₁₈-Alkylrest oder einen hydroxysubstituierten Alkylrest bedeutet, wobei die Reste R gleich oder verschieden sein können. Hydroxy-substituierte Alkylreste sind bevorzugt Hydroxyethyl-, Hydroxypropyl- oder Hydroxybutylreste. Besonders bevorzugt sind N,N-bis(2-hydroxyethyl)-alkylamine. Technisch kommen häufig Gemische unterschiedlich substituierter tertiärer aliphatischer Amine zum Einsatz, die auch um Oxyalkyliden-Gruppen verlängerte Hydroxyalkylketten enthalten können. Darüber hinaus können auch N,N-bis-Hydroxyalkyl-fettsäurester zum Einsatz kommen.

Als Carbonsäureamide sind Amide einer Carbonsäure mit 8 bis 24 C-Atomen oder Mischungen dieser Amide umfaßt. Insbesondere sind Erucasäureamid, Ölsäureamid, Stearinsäureamid und ähnliche bevorzugt.

Als Glycerinmonostearate kommen technisch gleichfalls Stoffgemische in Betracht, die neben dem Stearylrest auch weitere Fettsäurereste enthalten können und sich bzgl. des Substitutionsmusters am Glycerinrest unterscheiden. Besonders vorteilhaft sind Gemische mit einem hohen Anteil an alpha-Glycerinmonostearat.

Die üblichen Menge an Antiblockmittel in den Deckschichten liegen im Bereich von 0,05 bis 2 Gew.-%, vorzugsweise 0,15 bis 0,6 Gew.-%. Fettsäureamide können in der Deckschicht in einer Menge von 0,05 bis 0,3 Gew.-%. Darüber hinaus können die Deckschichten auch Siloxane in einer Menge von 0,05 bis 1,0, vorzugsweise von 0,1 bis 0,5 Gew.-% enthalten.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate, und/oder vernetzte organische Polymerisate wie Polymethacrylate und Polysiloxane und dergleichen, bevorzugt werden Benzoguanaminformaldehyd-Polymere, Siliciumdioxid und Calciumcarbonat. Die mittlere Teilchengröße liegt zwischen 1 und 6 µm , insbesondere 2 und 5 µm

Die Gesamtdicke der Folie beträgt im allgemeinen mindestens 50 bis 150 µm, vorzugsweise 60 bis 120µm , insbesondere 75 bis 100µm. Dünne Folien von unter 50µm zeigen trotz rauher innerer Oberfläche bei der Verwendung als Etikett leicht Blasen, die häufig prall gefüllt oder aufgeblasen erscheinen.

Die Dicke der äußeren Deckschicht liegt bevorzugt im Bereich von 0,3 bis 5 µm , insbesondere 0,7 bis 2,5 µm. Im Rahmen der vorliegenden Erfindung hat sich gezeigt, daß eine vergleichsweise dicke äußere Deckschicht vorteilhaft für die Folienoptik ist, was für die Qualität des Druckbildes auf der bedruckten äußeren Seite der Etikettenfolie von Vorteil ist. Dabei wurde gefunden, daß für opake Basisschichten mit einer Schichtdicke von bis zu 70 µm die Deckschichtdicke vergleichsweise unkritisch ist. Es hat sich gezeigt, daß mit sehr dicken opaken Basisschichten von über 80 µm eine gleichmäßige Optik besonders schwierig zu erzielen ist. Dieses Problem konnte gelöst werden, indem die dicke opake Basisschicht mit besonders dicken Deckschichten von über 1,5 µm versehen wird.

Die Schichtdicke der inneren Deckschicht liegt in einem Bereich von 1 bis 5 µm. Vorteile bzgl. der Haftung des Etiketts auf dem Hohlkörper ergeben sich, wenn die Schichtdicke der inneren Deckschicht im Bereich von 1 bis 4 µm , vorzugsweise 2 bis 4 µm liegt. Ferner ergibt sich eine besonders gute Planlage bei der Verarbeitung der Folie (Drucken, Stapeln und Vereinzeln), wenn die Dicke der Deckschicht auf der inneren Seite gleich der oder um nicht mehr als 100 % höher war als die Deckschicht auf der inneren Seite.

Um den verschiedenen Anforderungen weitestgehend gerecht zu werden, ist eine Ausführungsform der Folie mit einer äußeren Deckschicht von 1,5 bis 2,5 µm und einer inneren Deckschicht von 2,5 bis 4 µm besonders vorteilhaft.

Die erfindungsgemäße Folie ist mindestens dreischichtig und umfaßt als wesentliche coextrudierten Schichten immer die Basisschicht sowie beidseitig mindestens je eine Deckschicht, wobei Ausführungsformen mit einer opaken Basisschicht bevorzugt sind. Gegebenenfalls sind auch vier- und fünfschichtige Ausführungsformen möglich, bei welchen die opake Schicht die Basisschicht der Folie bildet und ein- oder beidseitig auf den Oberflächen der Basisschicht eine Zwischenschicht aufgebracht ist.

Häufig anzutreffende Ausbildungsformen von BOPP-Folien werden auf einer Seite Corona- oder Flamm-behandelt, um aufzutragende Druckfarben, Metallschichten oder Adhäsive zu verankern, vorzugsweise auf der äußeren Deckschicht.

Die gegenüberliegende, innere Seite bleibt üblicherweise unbehandelt. Die erfindungsgemäße In-Mould-Etikettenfolie erwies sich beim Einlegen in die Blasformmaschine nach dem Cut & stack-Verfahren in einer Ausführungsform mit beidseitiger Corona- oder Flamm-Vorbehandlung als besonders einfach und zuverlässig zu vereinzeln.

Die Erfindung betrifft weiterhin ein Verfahren zur Herstellung der erfindungsgemäßen Mehrschichtfolie nach dem an sich bekannten Coextrusionsverfahren.

Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend gegebenenfalls biaxial gestreckt (orientiert), die gegebenenfalls biaxial gestreckte Folie thermofixiert und an einer Seite, vorzugsweise an beiden Oberflächenschichten corona- oder flammbehandelt wird.

Die biaxiale Streckung (Orientierung) kann simultan oder aufeinanderfolgend durchgeführt werden, wobei die aufeinanderfolgende biaxiale Streckung, bei der zuerst längs (in Maschinenrichtung) und dann quer (senkrecht zur Maschinenrichtung) gestreckt wird, besonders günstig ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen bei einer Temperatur von 10 bis 90 °C, bevorzugt 20 bis 60 °C abgezogen, wobei sie abkühlt und sich verfestigt.

Vorzugsweise wird die so erhaltene Folie dann in Längsrichtung bei einer Temperatur von weniger als 140°C, vorzugsweise im Bereich von 110 bis 125 °C in einem Verhältnis von 4:1 bis 7:1 und in Querrichtung bei einer Temperatur größer 140°C, vorzugsweise bei 145 bis 160°C um den Faktor 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Vorzugsweise werden, wie oben erwähnt, nach der biaxialen Streckung üblicherweise eine, vorzugsweise beide Oberfläche/n der Folie nach einer der bekannten Methoden corona- und/oder flammbehandelt.

Für die alternative Coronabehandlung wird die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Die Erfindung wird nunmehr durch die nachfolgenden Beispiele erläutert.

### Beispiel 1

Nach dem Coextrusionsverfahren wurde aus einer Breitschlitzdüse bei einer Extrusionstemperatur von 260 °C als Summe eine Dreischichtfolie mit einem Schichtaufbau ABC extrudiert, d. h. auf die Basisschicht B war auf der zur Bedruckung vorgesehenen, als "äußere" bezeichneten Seite eine Deckschicht A, auf der gegenüberliegenden "inneren" Seite eine Deckschicht C aufgebracht. Die Deckschichten A und C wurden coronabehandelt.

Die wesentlichen Komponenten der Basisschicht B waren:

| | |
|---|---|
| 88,65 Gew.-% | Propylenhomopolymerisat (PP) mit einem n-heptanlöslichen Anteil von 4,5 Gew.-% (bezogen auf 100 % PP) und einem Schmelzpunkt von 165 °C; und einem Schmelzflußindex von 3,2 g/10 min bei 230 °C und 2,16 kg Belastung (DIN 53 735); |
| 6,00 Gew.-% | TiO₂ über Masterbatch ® P 8555 LM, Lieferant Firma Schulman GmbH, Hüttenstraße 211, D-54578 Kerpen; |
| 0,10 Gew.-% | N,N-bis(2-hydroxyethyl)-(C₁₀-C₂₀)-alkylamin (®Armostat 300) |
| 0,25 Gew.-% | Erucasäureamid |
| 5,00 Gew.-% | Calciumcarbonat mit einer mittleren Teilchengröße von 3 µm. |

Die Deckschicht A bestand aus einem statistischen Ethylen-Propylen-Copolymeren der Fa.Solvay (Eltex PKS 409), mit einem Ethylengehalt von 4,5 Gew.-%. Der Schmelzpunkt des Ethylen-Propylen-Copolymeren lag bei 134 °C, wobei der Schmelzflußindex (230°C/2,16 kg) 7,0 g/10 min betrug.

Die Deckschicht C bestand aus einer Mischung aus

| | |
|---|---|
| 74,8 Gew.-% | eines statistischen Ethylen-Propylen-Copolymeren der Fa.Solvay (Eltex PKS 409), mit einem Ethylengehalt von 4,5 Gew.-%, und einem Schmelzpunkt von 134°C und einem Schmelzflußindex von 7,0 g/10 min bei 230° C und 2,16 kg |
| 25 Gew-% | eines HDPE in Blasfolienqualität mit einer Dichte von 0,934 und einem MFI von 0,15g/10min bei 190°C und 2,16 kg und |
| 0,1 Gew-% | Antiblockmittel (®Syloblock 45) sowie |
| 0,1 Gew-% | Erucasäureamid. |

Alle Schichten enthielten zur Stabilisierung 0,12 Gew.-% Pentaerythrityl-Tetrakis-4-(3,5-ditertiärbutyl-4-hydroxyphenyl)-propionat (®Irganox 1010) sowie als Neutralisationsmittel 0,06 Gew.-% Calciumstearat.

Die extrudierte Dreischichtfolie wurde über die entsprechenden Verfahrensschritte nach der Coextrusion über eine erste Abzugswalze und ein weiteres Walzentrio abgezogen und abgekühlt, anschließend längsgestreckt, quergestreckt, fixiert und coronabehandelt, wobei im einzelnen die folgenden Bedingungen gewählt wurden:

| | |
|---|---|
| Extrusion | Extrusionstemperatur 260 °C |
| Längsstreckung | Streckwalze T = 122 °C |
| Längsstreckung um den | Faktor 4,9 |
| Querstreckung | Aufheizfelder T = 170 °C |
| Streckfelder | T = 159 °C |
| Querstreckung um den | Faktor 9,5 |
| Fixierung | Temperatur T = 115 °C |
| Coronabehandlung | Spannung: 10 000 V |
| | Frequenz: 10 000 Hz |

Die so hergestellte Mehrschichtfolie wies direkt nach der Herstellung eine Oberflächenspannung von 40 bis 41 mN/m auf der äußeren Seite, eine solche von 39 bis 40 mN/m auf der inneren Seite auf. Die Folie war ca. 90 µm dick, wobei die Dicke der Deckschicht A etwa 2 µm, diejenige der Deckschicht C 4 µm betrug. Die Folie wies eine Dichte von 0,72 g/cm³ auf.

Die Folie wurde bedruckt und auf die Etikettenform zugeschnitten und gestapelt. Die Etikettenstapel wurden wie üblich an der Blasformmaschine bereitgestellt. Eine Blasformmaschine mit automatischer Etikettenzuführung wurde mit einem Werkzeug "A" für eine bauchige Flasche mit senkrecht nach oben weisendem Ausguß bestückt. Die Geometrie der Flaschenform A wurde so gewählt, daß ein horizontaler Schnitt in halber Höhe der zu etikettierenden Fläche ein Verhältnis von Länge zu Breite von 131 zu 91 mm aufwies. Die Blasformmachine wurde mit HD-PE Blasformware beschickt und unter den für HD-PE üblichen Verarbeitungsbedingungen gefahren.

Die Ergebnisse des Versuchs sind in der untenstehenden Tabelle beschrieben.

### Beispiel 2

Beispiel 1 wurde wiederholt, wobei die Basisschicht als Gleit- und Antistatik-Mittel

| | |
|---|---|
| 0,15 Gew.-% | Glycerin-monostearat |
| 0,05 Gew.-% | N,N-bis(2-hydroxyethyl)-(C₁₀-C₂₀)-alkylamin (®Armostat 300) |
| 0,05 Gew.-% | Erucasäureamid |

enthielt. In der Deckschicht C wurde außerdem das oben beschriebene PE und das oben beschriebene PP im Verhältnis 40 : 60 eingesetzt. Die Verfahrensparameter (Extruderdrehzahl) wurden so eingestellt, daß, abweichend von Beispiel 1, die Gesamt-Dicke der Folie 60 µm, die Dicke der Deckschicht auf der inneren Seite 3 µm betrug.

### Beispiel 3

Beispiel 1 wurde wiederholt, wobei die Dicke der Folie 70 µm, ihre Dichte 0,8 g/cm³, die Dicke der Deckschicht A auf der äußeren Seite 1,5 µm, die Dicke der Deckschicht C auf der inneren Seite 3 µm betrug sowie PE und PP im Verhältnis 25:75 enthielt.

### Beispiel 4

Beispiel 1 wurde wiederholt., wobei die Mischung der inneren Deckschicht C statt HDPE 25 Gew.-% eines LDPE' s (Borealis LE 0609) mit einer Dichte von 0,923 und mit einem Schmelzflußindex von 0,85g/10min bei 190°C und 2,16 kg enthielt.

### Vergleichsbeispiel 1

Beispiel 1 wurde wiederholt, wobei die Dicke der Folie 90 µm betrug. Beide Deckschichten hatten die gleiche Zusammensetzung wie die äußere Deckschicht A in Beispiel 1, d. h. bestanden im wesentlichen aus statistischem Ethylen-Propylen-Copolymeren.

### Vergleichsbeispiel 2

Vergleichsbeispiel 1 wurde wiederholt, jedoch wurde die Blasformmaschine mit einem Werkzeug "B" für eine bauchige Flasche bestückt, welches gleichfalls einen senkrecht nach oben weisenden Ausguß aufweist. Die Geometrie der Flaschenform "B" wurde jedoch so gewählt, daß ein horizontaler Schnitt in halber Höhe der zu etikettierenden Fläche ein Verhältnis von Länge zu Breite von 135 zu 82 mm aufwies, dessen Langseite näherungsweise einen Kreis mit einem Radius 285 mm entspricht.

### Vergleichsbeispiel 3

Beispiel 1 wurde wiederholt, wobei die Dicke der Folie 40 µm; die Dicke der Deckschicht auf der inneren Seite 3 µm betrug.

### Vergleichsbeispiel 4

Beispiel 1 wurde wiederholt, wobei die Dicke beider Deckschichten 0,7 µm betrug.

### Vergleichsbeispiel 5

Beispiel 1 wurde wiederholt, wobei die Dichte der Folie 0,52 g/cm³ betrug.

### Beispiel 5

Vergleichsbeispiel 3 wurde wiederholt, wobei die Dichte der Folie 0,65 g/cm³ betrug.

### Vergleichsbeispiel 6

Beispiel 3 wurde wiederholt, wobei die Dichte der Folie 0,86 g/cm³, die Dicke der inneren Deckschicht 2 µm betrug.

### Vergleichsbeispiel 7

Beispiel 1 wurde wiederholt, wobei nur die Außenseite der Folie Corona-behandelt wurde.

### Vergleichsbeispiel 8

Beispiel 1 wurde wiederholt, wobei die Dicke der äußeren Deckschicht 1 µm betrug.

Zur Charakterisierung der Rohstoffe und der Folien wurden die folgenden Meßmethoden benutzt:

### Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

### Schmelzpunkte

DSC-Messung, Maxima der Schmelzkurve, Aufheizgeschwindigkeit 20 K/min.

### Rauheitsmessung

Als Maß für die Rauheit der Innenseiten der Folien wurden die Rauheitswerte Rz der Folien wurden in Anlehnung an DIN 4768 Teil 1 und DIN 4777 sowie DIN 4772 und 4774 mittels eines Perthometer Typ S8P der Firma Feinprüf Perthen GmbH, Göttingen, nach dem Tastschnitt-Verfahren gemessen. Der Meßkopf, ein Einkufentastsystem gemäß DIN 4772, war mit einer Tastspitze mit dem Radius 5 µm und einem Flankenwinkel von 90 ° bei einer Auflagekraft von 0,8 bis 1,12 mN sowie einer Gleitkufe mit Radius 25 mm in Gleitrichtung ausgestattet. Der vertikale Meßbereich wurde auf 62,5 µm, die Taststrecke auf 5,6 mm und der Cut-off des RC-Filters gemäß DIN 4768/1 auf 0,25 mm eingestellt.

### Dichte

Die Dichte wird nach DIN 53 479, Verfahren A, bestimmt.

### Bewertung der Handling-Eigenschaften:

Rollneigung: Ein Folienblatt vom Format DIN A4 wird jeweils mit der Unter- und der Oberseite auf eine flache Unterlage gelegt. Nach Abklingen eventueller statischer Aufladung wird bewertet und ggf. gemessen, ob und inwieweit die Ränder der Folie sich von der Unterlage abheben. Bei einer Randhöhe von weniger als 1 mm gilt die Rollneigung als gut, bei bis zu 2 mm als mäßig.

Vereinzelbarkeit: Bewertet wird die Häufigkeit, mit der ein Handhabungsautomat bei der Beschickung einer Bogen-Off-set-Druckmaschine bzw. der Blasformmaschine mehr als ein Folienblatt vom Stapel entnimmt. Bei einer Fehlentnahmerate von unter 1 :10000 gilt die Entstapelbarkeit als gut, bei über 1 : 5000 als schlecht.
Formbeschickung: Bewertet wird die Fehlerrrate bei der Einlegung des Etiketts in die Blasform. Häufige Fehler sind Knickbildung, eingeschlagene Kanten und, bei elektrostatischer Fixierung, Fehlpositionierung durch Verschiebung in der Form. Bei einer Fehlerrate von unter 1 :10000 gilt die Beschickungsfähigkeit als gut, bei über 1 : 5000 als schlecht.

### Haftung

Bewertet wird, (A) ob sich der Rand des Etiketts ohne Verwendung von Werkzeug abheben läßt, (B) ob sich eine Folie, die am Rand vom Untergrund gelöst wurde, zerstörungsfrei abziehen läßt und (C) ob sich das Etikett nach Biegebeanspruchung mit einem Biegeradius von kleiner 3 cm von der Unterlage ablöst. Als schlecht gilt, wenn (A) der Rand sich stellenweise an mehr als 1 von 100 Hohlkörpern spontan löst, wenn (B) sich von mehr als 1 von 100 Hohlkörpern das am Rand gelöste Etikett unzerstört abziehen läßt oder wenn (C) sich das Etikett nach Biegebeanspruchung mit einem Biegeradius von kleiner 3 cm von der Unterlage ablöst.

Aussehen der etikettierten Flasche: Bewertet wird die Zahl und Größe von blasenförmigen Abhebungen, zudem werden die Blasen klassifiziert nach ihrer Art und Größe. Das Aussehen einer etikettierten Flashe wird als gut eingestuft, wenn weniger als 30 Bläschen des Orangenhauttyps auf dem Etikett zu sehen sind, als mäßig, wenn mehr als 200 Bläschen zu sehen sind.
Große Blasen: Das Aussehen einer etikettierten Flasche wird als gut eingestuft, wenn nicht mehr als 3 Blasen von nicht mehr als 3 mm Durchmesser und nicht mehr als 0,5 mm Höhe zu sehen sind. Das Aussehen gilt als schlecht, wenn mehr als 15 kleinere Blasen von nicht mehr als 3 mm Durchmesser und nicht mehr als 0,5 mm Höhe bzw. eine Blase von mehr als 10 mm Durchmesser oder 1 mm Höhe zu sehen sind. Maßgebend sind die schlechtesten Flaschen.

In der nachstehenden Tabelle sind die Eigenschaften der In-Mould-etikettierten blasgeformten Flaschen der Beispiele und Vergleichsbeispiele zusammengefaßt.

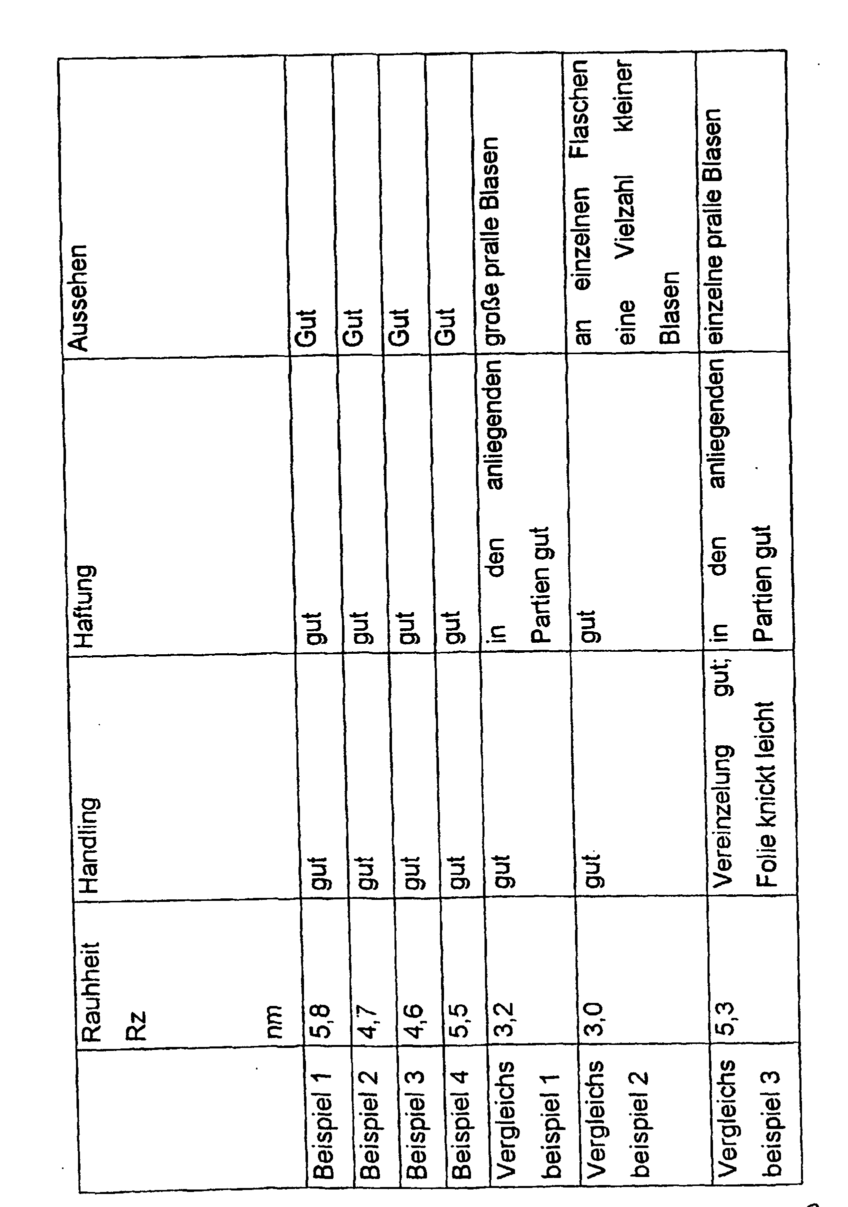

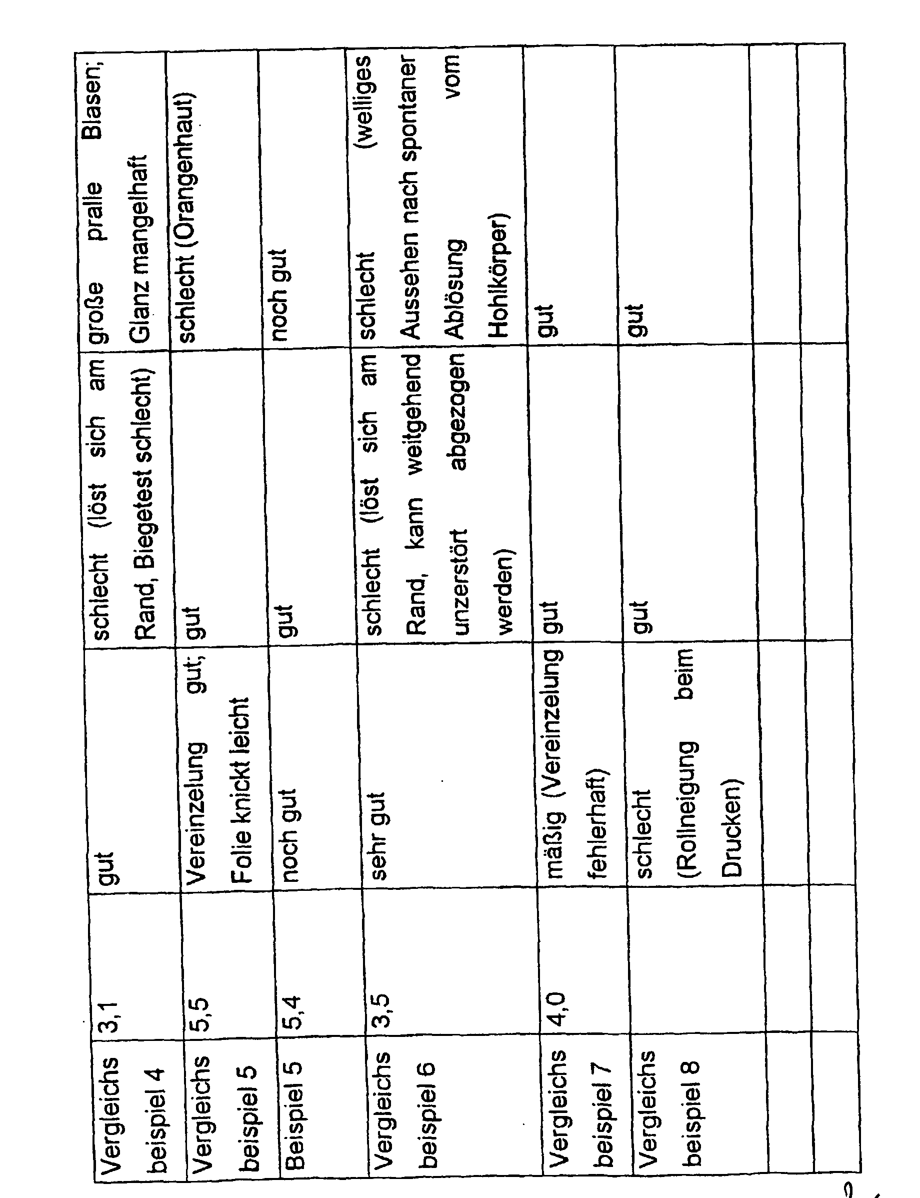

## Patentansprüche

1. Verwendung einer mehrschichtigen Polypropylenfolie als In-Mould-Etikett im Blasform-Verfahren, bei dem eine Etikettenfolie, welche mindestens eine Basisschicht und Füllstoffe enthält, eine innere Deckschicht mit einer Dicke von 1 bis 5 µm, und eine äußere Deckschicht umfaßt, so in eine Hohlform einer Blasformmaschine eingelegt wird, daß die innere Deckschicht einem zu formenden HDPE-Behältnis zugewendet ist und die äußere Deckschicht mit der Hohlform in Kontakt befindlichen ist, **dadurch gekennzeichnet, daß** die innere Deckschicht eine Mischung von Polypropylen, Propylencopolymeren oder Propylenterpolymeren mit unverträglichen oder teilverträglichen Polymeren enthält und eine Rauheit Rz von 3,5 bis 10µm aufweist.

2. Verwendung nach Anspruch 1, **dadurch gekennzeichnet, daß** das unverträgliche Polymere ein Polyethylen ist.

3. Verwendung nach Anspruch 2 **dadurch gekennzeichnet, daß** die Mischung PE und PP in einem Gewichtsverhältnis von PE:PP = 1:12 bis 5:1 enthält.

4. Verwendung nach einem der Ansprüche 1 bis 3, **dadurch gekennzeichnet, daß** die Basisschicht eine opake Schicht ist und vakuoleninitiierende Füllstoffe enthält und die Dichte der Folie 0,65 bis 0,85 g/cm³ beträgt.

5. Verwendung nach einem oder mehreren der Ansprüche 1 bis 4, **dadurch gekennzeichnet, daß** die Dicke der Folie mindestens 50 µm beträgt.

6. Verwendung nach einem oder mehreren der Ansprüche 1 bis 5, **dadurch gekennzeichnet, daß** die Dicke der Folie 75 und 120 µm beträgt.

7. Verwendung nach einem oder mehreren der Ansprüche 1 bis 6, **dadurch gekennzeichnet, daß** die Dicke der äußeren Deckschicht zwischen 0,3 und 5 µm beträgt.

8. Verwendung nach einem oder mehreren der Ansprüche 1 bis 7, **dadurch gekennzeichnet, daß** die Folie in ihrer Basisschicht ethoxylierte Fettsäureamide enthält.

## Claims

1. Use of a multi-layered polypropylene film as an in-mould label in the blow moulding process by which a label film, which contains at least one base layer and fillers, includes an inner top coat of from 1 to 5 µm thick and an outer top coat, is positioned into a hollow mould of a blow moulding machine in such a manner that the inner top coat is turned toward a to-be-formed HDPE container and the outer top coat is contacting the hollow mould, **characterized in that** the inner top coat contains a mixture of polypropylene, propylene copolymers or propylene terpolymers with incompatible or partially compatible polymers and comprises a roughness Rz of 3.5 to 10 µm.

2. Use as set forth in claim 1, **characterized in that** the incompatible polymer is a polyethylene.

3. Use as set forth in claim 2, **characterized in that** the mixture contains PE and PP in a ratio by weight of PE:PP = 1:12 to 5:1.

4. Use as set forth in any of the claims 1 through 3, **characterized in that** the base layer is an opaque layer and contains fillers initiating the formation of voids and that the density of the film ranges from 0.65 to 0.85 g/cm³.

5. Use as set forth in one or more of the claims 1 through 4, **characterized in that** the thickness of the film is at least 50 µm.

6. Use as set forth in one or more of the claims 1 through 5, **characterized in that** the thickness of the film is 75 and 120 µm.

7. Use as set forth in one or more of the claims 1 through 6, **characterized in that** the thickness of the outer top coat ranges between 0.3 and 5 µm.

8. Use as set forth in one or more of the claims 1 through 7, **characterized in that** the film contains ethoxylated fatty acid amides in its base layer.

## Revendications

1. Utilisation d'un film polypropylène multicouches comme étiquette « in mould label » dans un procédé de moulage par soufflage selon lequel un film pour étiquette contenant une couche de base et des matières de charge et comprenant une couche de recouvrement intérieure d'une épaisseur comprise entre 1 et 5 µm et une couche de recouvrement extérieure est placé de telle manière dans un moule creux d'une machine de moulage par soufflage que la couche de recouvrement intérieure est tournée vers le récipient en PEHD qu'il y a lieu de réaliser et que la couche de recouvrement extérieure est en contact avec le moule creux, **caractérisée en ce que** la couche de recouvrement intérieure contient un mélange de polypropylène, de copolymères de propylène ou de terpolymères de propylène avec des polymères incompatibles ou partiellement compatibles et comporte une rugosité Rz comprise entre 3,5 et 10 µm.

2. Utilisation selon la revendication 1, **caractérisée en ce que** le polymère incompatible est un polyéthylène.

3. Utilisation selon la revendication 2, **caractérisée en ce que** le mélange contient du PE et du PP dans un rapport pondéral PE:PP compris entre 1:12 et 5:1.

4. Utilisation selon l'une quelconque des revendications 1 à 3, **caractérisée en ce que** la couche de base est une couche opaque et contient des matières de charge initiant le processus de formation d'alvéoles et que la densité du film est comprise entre 0,65 et 0,85 g/cm³.

5. Utilisation selon une ou plusieurs des revendications 1 à 4, **caractérisée en ce que** l'épaisseur du film est d'au moins 50 µm.

6. Utilisation selon une ou plusieurs des revendications 1 à 5, **caractérisée en ce que** l'épaisseur du film est de 75 et de 120 µm.

7. Utilisation selon une ou plusieurs des revendications 1 à 6, **caractérisée en ce que** l'épaisseur de la couche de recouvrement extérieure est comprise entre 0,3 et 5 µm.

8. Utilisation selon une ou plusieurs des revendications 1 à 7, **caractérisée en ce que** le film contient dans sa couche de base des amides d'acides gras éthoxylés.
